# EUROPEAN PATENT SPECIFICATION

(11) **EP 0 340 565 B1**
(45) Date of publication and mention of the grant of the patent: **12.01.1994**
(21) Application number: 89107223.3
(22) Date of filing: 21.04.1989
(51) Int. Cl.: C09D 133/06, C09D 7/12, B32B 27/00

(54) **UV stabilized acrylic primer composition**
UV-stabilisierte Acryl-Grundierungszusammensetzung
Composition de revêtement primaire, stabilisée contre les UV

(30) Priority: 04.05.1988 US 190292
(43) Date of publication of application: 08.11.1989
(73) Proprietor: GENERAL ELECTRIC COMPANY, Schenectady New York 12305 (US)
(72) Inventor: Goossens, John Charles, Mt. Vernon Indiana 47620 (US)
(74) Representative: Pratt, Richard Wilson

(56) References cited:
- FR-A- 2 400 059
- US-A- 4 396 644

## Description

### Background of the Invention

The present invention relates to primer compositions for improving the adhesion characteristics of silicone top coats to thermoplastic substrates, and more particularly, relates to primer layers containing UV stabilizers for providing improved weathering resistance to articles having silicone coated polycarbonate substrates.

Various acrylic primer compositions are known which when applied to thermoplastic substrates and dried thereon, improve the ability of silicone top coats to adhere to the thermoplastic substrates. Although improved adhesion of the silicone top coat to thermoplastic substrates, in particular, polycarbonate substrates, has been effected by using an acrylic primer, the silicone coated polycarbonate articles often do not satisfy the stringent weathering resistance requirements of the automotive industry. The weathering life of these articles has been improved in the past by the addition of UV light stabilizers, such as 2-(2′-hydroxy-5′-t-octylphenyl)benzotriazole, to the primer compositions. Prior primer compositions containing amounts of 2- (2′-hydroxy-5′-t-octylphenyl) benzotriazole have been significantly limited in the amounts included therein by the tendency of 2-(2'-hydroxy-5'-t-octylphenyl)benzotriazole to crystallize during drying of the primer layer thereby interfering with the optical quality of the primer layer and reducing the effective amount of UV stabilizer present in the primer layer for protection of the article.

FR-A-2400059 discloses a process for applying and adhering a silicone or siloxane based abrasion-resistant coating to a polycarbonate substrate comprising applying a tie coating composition comprising a thermoplastic polymer of an alkyl methacrylate or a thermoplastic copolymer polymerized from a monomer mixture consisting essentially of at least 50 weight percent of at least one alkyl methacrylate or a mixture of such polymers and a flow improver dissolved in one or more organic solvents and drying at a temperature of about 20° to 30°C prior to applying said abrasion-resistant coating.

US-A-4396644 discloses a process for producing an aromatic polycarbonate article having improved surface properties which comprises forming a primer layer comprising a thermoplastic acrylic copolymer of an alkyl methacrylate and an alkyl acrylate having an average molecular weight of about 50,000, which is determined by gel permeation chromatography, and an ultraviolet light absorbent on an aromatic polycarbonate article, and forming a protective topcoat comprising a cured organopolysiloxane on said primer layer.

Thus, one object of the present invention is to provide an additive for primer compositions containing amounts of 2-(2'-hydroxy-5'-t-octylphenyl)benzotriazole which will permit the presence of higher levels of the latter than is permitted by conventional primer compositions.

It is still another object of the present invention to provide a primer composition which provides improved weathering resistance for silicone coated polycarbonate articles.

### Description of the Invention

Accordingly, the present invention provides a primer composition for providing a primer layer on thermoplastic substrates which improves the ability of silicone hardcoats to adhere to the thermoplastic substrates. The primer composition of the present invention contains an amount of 2-(2'-hydroxy-5'-t-octylphenyl)benzotriazole which functions as a UV stabilizer and further contains an additive, nickel dibutyldithiocarbamate, which (i) reduces the tendency of 2-(2'-hydroxy-5'-t-octylphenyl) benzotriazole to crystallize during drying of the primer layer, (ii) effectively permits the presence of higher levels of 2-(2'-hydroxy-5'-t-octylphenyl) benzotriazole in the primer composition and (iii) improves the weathering resistance, and thus extends the useful life, of silicone coated polycarbonate articles over similar articles having primer layers which lack the primer additive of the present invention.

Briefly, the present invention involves a primer composition comprising:
(a) an acrylic polymer;
(b) a solvent system; and
(c) a UV stabilizer comprising
   (i) 2-(2′-hydroxy-5′-t-octylphenyl) benzotriazole; and
   (ii) nickel dibutyldithiocarbamate.

Also briefly, the present invention involves a thermoplastic article comprising:
(A) a thermoplastic substrate having a surface;
(B) an acrylic primer layer adhered to the surface, the primer layer comprising
   (1) an acrylic polymer and
   (2) a UV stabilizer comprising respective amounts of
      (i) 2-(2′-hydroxy-5′-t-octylphenyl)benzotriazole and
      (ii) nickel dibutyldithiocarbamate; and
(C) a cured silicone top coat adhered to the primer layer.

Preferably the primer composition comprises an acrylic polymer present at a level of from about 1.0 to about 5.0 percent by weight of the composition, and more preferably at a level of about 2.0 percent by weight of the composition; a solvent system present at a level of from about 90 to about 98.5 percent by weight of the composition and more preferably at a level of about 97 percent by weight of the composition and a UV stabilizer comprising (i) 2-(2′-hydroxy-5′-t-octylphenyl)benzotriazole present at a level of from about 0.5 to about 2.0 percent by weight of the composition, and more preferably at a level of about 0.8 percent by weight of the composition, and (ii) nickel dibutyldithiocarbamate present at a level of from about 0.05 to about 0.2 percent by weight of the composition, and more preferably at a level of about 0.08 percent by weight of the composition. The chemical 2-(2′-hydroxy-5′-t-octylphenyl)benzotriazole is commercially available from American Cyanamid under the trademark Cyasorb® UV 5411, and nickel dibutyldithiocarbamate is sold by DuPont under the trademark Rylex® NBC.

Suitable acrylic polymers include thermoplastic acrylic polymers. Some of the thermoplastic acrylic polymers used in the practice of the present invention are shown in the Encyclopedia of Polymer Science & Technology, Vol. 1, Interscience Publishers, John Wiley & Sons, Inc., (1964), page 246. For example, the term "thermoplastic acrylic polymer" means polymers resulting from the polymerization of acrylic acid, or methacrylic acid or ester thereof, such as methacrylic acid ester monomers. Some of these monomers can be represented by the general formula, 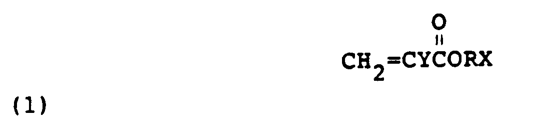
where Y is H or a methyl radical, R is a C₍₁₋₁₂₎ alkyl radical, X is a member selected from hydrogen, hydroxy, carboxy, epoxide, amide, -SH, SO₃H, COOR¹, and Si(OR²)₃, where R¹ and R² are C₍₁₋₂₀₎ organic radicals.

Radicals included by R, R¹, and R² are for example, ethyl, methyl, propyl, isopropyl, butyl, t-butyl, pentyl, hexyl, heptyl, 2-ethylhexyl, and octyl. In instances where the aforementioned R-R² radicals can represent more than one radical, these radicals can be the same or different.

There are include within the acrylic acid ester monomers of formula (1) compounds such as methyl acrylate, isopropyl acrylate, n-propyl acrylate, n-butyl acrylate, isobutyl acrylate, sec-butyl acrylate, 2-ethylhexyl acrylate, etc. Exemplary methacrylic acid ester monomers of formula (1) include methyl methacrylate, ethyl methacrylate, n-butyl methacrylate, isobutyl methacrylate, hexyl methacrylate, etc.

Functional acrylic ester monomers also are included in formula (1) which are shown as follows

CH₂ = CCH₃COOCH₂CH₂OH

CH₂ = CHCOOCH₂CH₂OH

CH₂ = CHCOOCH₂CHOHCH₃

CH₂ = CHCOOCH₂CH₂Si(OCH₃)₃

CH₂ = CCH₃COOCH₂CH₂Si(OCH₃)₃

CH₂ = CCH₃COOCH₂CH₂CH₂CH₂COOH

CH₂ = CCH₃COO(CH₂)₆SH

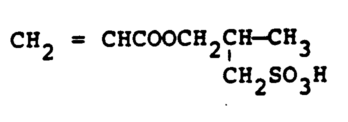

CH₂ = CHCOOCH₂CH₂CH₂CONH₂

CH₂ = CCH₃COOCH₂CH₂CH₂COOCH₂CH₃

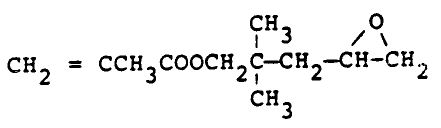

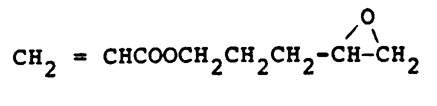

Copolymers of the above acrylate and/or methacrylate monomers are also included within the term "thermoplastic acrylic polymers" as it appears herein. The polymerization of the monomeric acrylic acid esters and methacrylic acid esters to provide the thermoplastic acrylic polymers useful in the practice of the invention may be accomplished by any of the well known polymerization techniques. The thermoplastic acrylic polymers having a molecular weight of at least about 15,000 generally are preferred in the practice of the instant invention.

The thermoplastic acrylic polymers useful in the practice of the instant invention include acrylic ester homopolymers derived from acrylic acid ester monomers; methacrylate ester homopolymers derived from methacrylic acid ester monomers; and copolymers derived from two different acrylic acid ester monomers, or two different methacrylic acid ester monomers, or an acrylic acid ester monomer and a methacrylic acid ester monomer.

Mixtures of two or more of the aforedescribed thermoplastic acrylic polymers, e.g., two or more different acrylic ester copolymers, two or more different methacrylic ester homopolymers, two or more different methacrylic ester copolymers, an acrylic ester homopolymer and a methacrylic ester homopolymer, an acrylic ester copolymer and an acrylic ester copolymer, and acrylic ester homopolymer and a methacrylic ester copolymer, etc., can also be used in the present invention.

The preferred acrylic resin is polymethylmethacrylate (PMMA) which is a thermoplastic polymer of methyl methacrylate. The preferred polymethylmethacrylate has an average molecular weight of 350,000, has an inherent viscosity of 1.3, and is used in powdered form prior to dissolution in the solvent of the composition. Other suitable acrylic resins include various thermoplastic polymers or copolymers of acrylic acid, methacrylic acid, or esters of these acids, as well as other suitable acrylic resins. Polymethylmethacrylate may be purchased under the trademark Elvacite® from DuPont Company, Wilmington, Delaware, and is commercially available.

Solvents suitable for use in the above liquid carrier systems are organic liquids which dissolve the thermoplastic acrylics described above but are not so aggressive that they will injure or attack the thermoplastic substrates. Generally, such organic solvents are alcohols, ethers, esters, or ketones. Preferred such organic solvents have hydroxyl groups to lessen their aggressiveness to the substrate. Recommended organic solvents are the alkanols or hydroxy ethers. Recommended hydroxy ethers are represented by the general formula:

R¹-O-R²-OH (2)

wherein R¹ is an alkyl radical and R² is an alkylidene radical and preferably, the sum of the carbon atoms present in R¹ and R² is from 3 to 10. Recommended alkanols preferably contain from 1 to 4 carbon atoms and include methanol, ethanol, isopropanol, t-butanol and the like. Examples of suitable solvent systems include ethylene glycol diacetate, butoxyethanol, ethoxyethanol, butanol, propanol, 2-(2-methoxyethoxy)ethanol and combinations thereof.

The preferred solvent system includes respective amounts of diacetone alcohol (4-hydroxy-4-methyl-2-pentanone) (DAA), propylene glycol monomethyl ether (PM), and propyl ether of ethylene glycol (EP). More preferably, the solvent system consists essentially of diacetone alcohol at a level of from about 10 to about 20 percent by weight of the primer composition, most preferably at a level of about 15% by weight of the primer composition; propylene glycolmonomethyl ether at a level of from about 35 to 50 percent by weight of the primer composition and most preferably at a level of about 41% by weight of the primer composition, and propylether of ethylene glycol at a level of from about 35 to 50 percent by weight of the primer composition and most preferably at a level of about 41% by weight of the primer composition.

Diacetone alcohol (4-hydroxy-4-methyl-2-pentanone) exhibits good solvency for polymethylmethacrylate. Diacetone alcohol (DAA) is a colorless liquid, has a molecular weight of 116.2, a vapor pressure at 20°C of 152 Pa (1.1 mm Hg), a boiling point at 1.013 x 10⁵ Pa (1 atm) of 169°C, is miscible with alcohols aromatic and halogenated hydrocarbons, esters and water and is commercially available.

Propylene glycol monomethyl ether exhibits relatively low toxicity, improved wetting of the substrate, a high evaporation rate, relatively high solvency of the acrylic primer resin and relatively low sensitivity to water thus maintaining the acrylic in solution even in the presence of high concentrations of water. The high evaporation rate of propylene glycol monomethyl ether facilitates rapid drying of the primer layer. Propylene glycol monomethyl ether is a colorless liquid, has a boiling point of 120.1°C, a density of 0.9234 g/ml, a refractive index of 1.402 (25C), is soluble in water, methanol and ether, is sold under the trademark ARCOSOLV® PM by ARCO Chemical Company of Philadelphia, Pennsylvania, and is commercially available.

Propyl ether of ethylene glycol prevents streaking and hazing during drying and exhibits an acceptable level of solvency for the acrylic resin of the primer composition. Propyl ether of ethylene glycol (C₃H₇OC₂H₄OH) has a molecular weight of 104.15 and is sold under the trademark Ektasolve® EP Solvent by Eastman Chemical Products, Inc. of Kingsport, Tennessee, and is commercially available.

The primer composition of the present invention is formed by admixing the acrylic resin with the UV stabilizing or absorbing compound and the solvent.

The primer compositions of the instant invention may also optionally contain various flatting agents, surface active agents, stabilizers such as antioxidants, and thixotropic agents. All of these additives and the use thereof are well known in the art and do not require extensive discussion. It is understood that any compounds possessing the ability to function in such a manner, i.e., as a flattening agent, surface active agent, and stabilizer, can be used provided they do not adversely affect adhesion.

The preferred thermoplastic substrate for use herein is a polycarbonate sheet. Suitable polycarbonates may be prepared by reacting a dihydric phenol with a carbonate precursor, such as phosgene, a haloformate or a carbonate ester. Typically, these polycarbonates will have recurring structural units of the formula: 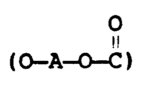
wherein A is a divalent aromatic radical of the dihydric phenol employed in the polymer producing reaction. Preferably, the aromatic carbonate polymers have an intrinsic viscosity ranging from 0.30 to 1.0 dl./g. (measured in methylene chloride at 25°C.) By dihydric phenols is meant mononuclear or polynuclear aromatic compounds containing two hydroxy radicals, each of which is attached to a carbon atom of an aromatic nucleus. Typical dihydric phenols include 2,2-bis(4-hydroxyphenyl) propane; 2,2-bis(3,5-dimethyl-4-hydroxyphenyl) propane, 4,4'-dihydroxydiphenyl ether, bis(2-hydroxyphenyl)methane, mixtures thereof and the like. The preferred aromatic carbonate polymer for use herein is a homopolymer derived from 2,2-bis(4-hydroxyphenyl)propane, i.e., bisphenol-A.

Also preferred for the use as the substrate herein is copolyester-carbonate sheet. The copolyester-carbonates constituting the substrate of the present invention contain recurring carbonate groups: 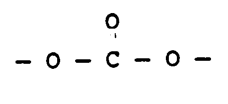
and carboxylate groups: 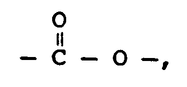
separated by the "A" divalent aromatic radicals in the polymer chain. These groups may occur either randomly or as blocks with the number of ester bonds, relative to the number of carbonate bonds, generally being in the range of from about 1/2 to about 6/1. The preferred copolyester-carbonates include the aromatic copolyester-carbonates derived from bisphenol A; phosgene; and isophthalic acid, terephthalic acid, or the reactive derivatives of these acids such as terephthaloyl dichloride, isophthaloyl dichloride, or mixtures thereof. Preferably, both isophthalic acid and terephthalic acid are employed in the copolyester-carbonate monomer mix. Additional examples of the copolyester-carbonates and methods of their manufacture are disclosed in U.S. Pat. Nos. 3,030,331, 3,169,121, 3,207,814, 4,156,069, 4,188,314, and 4,194,038 which are incorporated herein by reference.

The primer layer is applied to the thermoplastic substrate by applying a thin layer of the primer composition onto the substrate by any of the well known methods such as spraying, dipping, roll-coating and the like. The solvent is then evaporated off, as by air drying on mild heating, to leave an even and uniform layer of solids. Sufficient primer should be utilized to provide a thickness of from about 0.05 µm (0.002 mil) to about 25.4 µm (1.0 mil) preferably from about 0.13 µm (0.005 mil) to about 12.7 µm (0.05 mil) and most preferably from about 0.25 µm (0.01 mil) to about 2.54 µm (0.1 mil).

The organopolysiloxane top coat composition which can be applied onto the primed thermoplastic substrate in accordance with the practice of the present invention, can be in the form of a heat curable organopolysiloxane composition or a heat curable silica filled organopolysiloxane composition. Suitable topcoats include both organopolysiloxanes and modified silicate resins. Suitable topcoats are set forth in U.S. Patent Nos. 4,243,720; 4,027,073; 3,986,997; 3,888,815; 3,701,753; 3,375,223; 3,435,001; 3,450,672; 3,790,527; 3,832,319; 3,865,766; 3,887,514 and 3,925,276 all of which are incorporated by reference herein.

It is preferred that the cured top coat have a thickness of from about 2.54 µm (0.1) to about 17.78 µm (0.7 mils), more preferably from 2.54 µm (0.1) to about 12.7 µm (0.5 mils), and most preferably from about 3.81 µm (0.15) to about 7.62 µm (0.3 mils).

### EXAMPLES

In order that those skilled in the art may better understand how the present invention may be practiced, the following examples are given by way of illustration and not by way of limitation.

### EXAMPLE #1

Three primer blends were prepared to compare the behavior of three UV absorber types at high loading in a polymethylmethacrylate (PMMA) based primer. The absorbers were: UVINUL N-539, a diphenylcyanoacrylate; SYNTASE 1200, a hydroxybenzophenone and CYASORB UV-5411, a hydroxybenzotriazole. Each primer blend consisted of 2% by weight of Elvacite 2041 and 2% by weight of the UV stabilizer dissolved in a 60/30/10 PM/EP/DAA solvent blend. The solutions were flow coated on 152.4 mm x 203.2 mm x 6.35 mm (6"X8"X1/4") polycarbonate panels and allowed to air dry at room temperature. The N-539 primer dried smooth and clear, the Syntase 1200 primer dried with a heavy "Jack Frost" pattern of haze and the UV-5411 primer dried with circles of fine needle shaped crystals.

The panels were then flow coated with a silicone resin solution and oven cured at 127°C (260°F) for 1 hour. The clear topcoat layer partially hid the optical defects of the underlying primer layer. A 101.6 mm x 101.6 mm (4"X4") square and 50.8 mm x 101.6 mm (2"X4") coupon were sheared out of each panel. The coupons were scribed in cross hatch fashion with a tool having sharp blades spaced by 2 mm. Each passed tape adhesion (ASTM D-3359 Method B) as initially prepared. The test was rerun daily after soaking the coupons in a 65°C hot water bath. The N-539 primer failed after 4 days immersion. The SYNTASE 1200 and UV-5411 primers ran 7 days without failure. In accelerated weathering by exposure in a UVCON (Atlas Electric Co.) machine using an alternating 8 hour/60°C light and 4 hour/50°C dark cycle, the N-539 and SYNTASE 1200 squares lost scribed tape adhesion after 450 hours exposure. The UV-5411 square survived 650 hours before adhesion failure.

### EXAMPLE #2

Three benzotriazoles were compared in acrylic primer blends with and without added Rylex NBC. The primer compositions had 2% by weight of PMMA (Elvacite 2041) 1% by weight of a benzotriazole UV stabilizer (Tinuvin 327 which is 2-(3',5'-di-t-butyl-2'-hydroxyphenyl)-5-chlorobenzotriazole and is sold by Ciba Geigy, Tinuvin 328 which is 2-(3',5'-di-t-amyl-2'-hydroxyphenyl)benzotriazole and is sold by Ciba Geigy and UV-5411) in 60/30/10 PM/EP/DAA solvent blend. These were compared with analogous compositions to which 0.06 wt % Rylex NBC was added. These six compositions were flow coated on 152.4 mm x 203.2 mm x 6.35 mm (6"X8"X1/4") polycarbonate panels and allowed to air dry at room temperature. Their appearance was noted.

| | |
|---|---|
| Tin 327 alone | Deposit of large crystals over 100% of surface |
| Tin 327 + NBC | Deposit of small crystals over 100% of surface |
| Tin 328 alone | Deposit of small crystals over bottom 25% |
| Tin 328 + NBC | Deposit of small crystals over bottom 10% |
| UV-5411 alone | Deposit of small crystals over bottom 5% |
| UV-5411 + NBC | Entirely smooth and clear primer |

This demonstrates the ability of Rylex NBC to inhibit crystal growth and that UV-5411 is less inclined to crystallize than the two Tinuvin benzotriazoles. Each panel was given a silicone topcoat and those with the added NBC averaged about 50% longer adhesion life in UVCON exposure.

### EXAMPLE #3

Large 0.91 m x 1.52 m (3'X5') sheets of both 3.18 mm (1/8") and 6.35 mm (1/4") thickness were primed with an N-539 stabilized, Elvacite 2041 acrylic primer as control and the subject UV-5411/Rylex NBC stabilized primer. Primed sheets were topcoated with both standard silicone coating resin and resin which had been modified by addition of a UV stabilizer component as taught in U.S. Patent No. 4,278,804. Each primer consisted of 2.5% Elvacite 2041 PMMA acrylic resin, 0.8% UV stabilizer and 96.7% solvent. The control had 0.8% N-539, a diphenylcyanoacrylate, as the stabilizer whereas the primer representing the present invention had 0.72% of 2-(2'-hydroxy-5'-t-octylphenyl)benzotriazole UV-5411+ and 0.08% nickel dibutyldithiocarbamate Rylex NBC.

Test samples were cut from top and bottom of both the 3.18 mm (1/8") and 6.35 mm (1/4") thick sheets for accelerated weathering by UVCON exposure. The average scribed adhesion life for the four samples of each type was:

| Primer | Topcoat | Average Hours to Failure |
|---|---|---|
| N-539 Control | Unstabilized | 560 |
| N-539 Control | Stabilized | 2135 |
| UV-5411/NBC | Unstabilized | 750 |
| UV-5411/NBC | Stabilized | 2775 |

These results show that stabilizer added to the topcoat is highly beneficial, but the weatherability improvement provided by the primer having the particular ultraviolet radiation stabilizing combination of 2-(2'-hydroxy-5'-t-octylphenyl) benzotriazole/nickel dibutyldithiocarbamate is significant.

Cyasorb, Rylex, Elvacite, ARCOSOLV, Ektasolve, UVINUL, SYNTASE, CYASORB, UVCON and Tinuvin are trademarks which may be Registered Trademarks in one or more of the territories designated in this application.

## Claims

1. A thermoplastic article comprising:
(A) a substrate selected from the group consisting of aromatic polycarbonate substrates and aromatic copolyester-carbonate substrates, said substrate having a surface;
(B) an acrylic primer layer adhered to said surface, said primer layer comprising
(1) an acrylic polymer and
(2) a UV stabilizer comprising respective amounts of
(i) 2-(2'-hydroxy-5'-t-octylphenyl)-benzotriazole and
(ii) nickel dibutyldithiocarbamate; and
(C) a cured silicone top coat adhered to said primer layer.

2. The thermoplastic article of Claim 1 wherein said substrate is an aromatic polycarbonate substrate.

3. The thermoplastic article of Claim 2 wherein said acrylic polymer is polymethyl methacrylate.

4. The thermoplastic article of Claim 3 wherein said primer layer has a thickness of from about 0.025 µm (0.001 mil) to about 12.7 µm (0.5 mil).

5. A primer composition for thermoplastic substrates, said composition comprising:
(A) an acrylic polymer;
(B) a solvent system; and
(C) a UV stabilizer comprising
(i) 2-(2'-hydroxy-5'-t-octylphenyl) benzotriazole and
(ii) nickel dibutyldithiocarbamate

6. The composition of Claim 5 wherein said acrylic polymer is polymethyl methacrylate.

7. The composition of Claim 5 wherein said solvent system consists essentially of diacetone alcohol, propylene glycol monomethyl ether, and propyl ether of ethylene glycol.

8. The composition of Claim 5 wherein said solvent system is comprised of diacetone alcohol, propylene glycol monomethyl ether, and propyl ether of ethylene glycol.

9. The composition of Claim 8 wherein said 2-(2'-hydroxy-5'-t-octylphenyl)benzotriazole is present at a level of from about 0.5 to about 2.0 percent by weight of said composition, said nickel dibutyldithiocarbamate being present at a level of from about 0.05 to about 0.2 percent by weight of said composition.

10. A primer composition for thermoplastic substrates, said composition comprising:
(A) an acrylic polymer present at a level of from about 1 to about 5 percent by weight of said composition;
(B) a solvent system present at a level of from about 90 to about 98.5 percent by weight of said compositions and
(C) a UV stabilizer present at a level of from about 0.55 to about 2.2 percent by weight of said compositions, said UV stabilizer comprising
(i) 2-(2'-hydroxy-5'-t-octylphenyl) benzotriazole present at a level of from about 0.5 to about 2.0 percent by weight of said composition, and
(ii) nickel dibutyldithiocarbamate present at a level of from about 0.05 to about 0.2 percent by weight of said composition.

11. The composition of Claim 10 wherein said solvent system includes respective amounts of diacetone alcohol, propylene glycol monomethyl ether and propyl ether of ethylene glycol.

12. The composition of Claim 11 wherein said acrylic polymer is polymethyl methacrylate.

13. A primer composition for thermoplastic substrates, said composition comprising:
(A) from about 1 to about 5 percent by weight of polymethyl methacrylate;
(B) from about 10 to about 20 percent by weight of diacetone alcohol;
(C) from about 35 to about 50 percent by weight of propylene glycol monomethyl ether;
(D) from about 35 to about 50 percent by weight of propyl ether of ethylene glycol;
(E) from about 0.5 to about 2.0 percent by weight of 2-(2'-hydroxy-5'-t-octylphenyl) benzotriazole; and
(F) from about 0.05 to about 0.2 percent by weight of nickel dibutyldithiocarbamate.

## Patentansprüche

1. Thermoplastischer Gegenstand enthaltend:
(A) ein Substrat ausgewählt aus der Gruppe bestehend aus aromatischen Polycarbonatsubstraten und aromatischen Copolyester-Carbonatsubstraten, welches Substrat eine Oberfläche aufweist;
(B) eine acrylische Grundierschicht, die auf dieser Oberfläche haftet, wobei diese Grundierschicht umfaßt:
(1) ein acrylisches Polymer und
(2) einen UV-Stabilisator enthaltend entsprechende Mengen von
(i) 2-(2'-Hydroxy-5'-t-octylphenyl)-benzotriazol und
(ii) Nickeldibutyldithiocarbamat; und
(C) eine gehärtete Silikondeckschicht, die auf der besagten Grundierschicht haftet.

2. Thermoplastischer Gegenstand nach Anspruch 1, worin das besagte Substrat ein aromatisches Polycarbonatsubstrat ist.

3. Thermoplastischer Gegenstand nach Anspruch 2, worin das besagte acrylische Polymer Polymethylmethacrylat ist.

4. Thermoplastischer Gegenstand nach Anspruch 3, worin die Grundierschicht eine Dicke von etwa 0,025 µm (0,001 mil) bis etwa 12,7 µm (0,5 mil) aufweist.

5. Grundierzusammensetzung für thermoplastische Substrate, dadurch gekennzeichnet, daß die Zusammensetzung enthält:
(A) ein acrylisches Polymer;
(B) ein Lösungsmittelsystem und
(C) einen UV-Stabilisator enthaltend
(i) 2-(2'-Hydroxy-5'-t-octylphenyl)-benzotriazol und
(ii) Nickeldibutyldithiocarbamat.

6. Zusammensetzung nach Anspruch 5, worin das acrylische Polymer Polymethylmethacrylat ist.

7. Zusammensetzung nach Anspruch 5, worin das Lösungsmittelsystem im wesentlichen aus Diacetonalkohol, Propylenglykolmonomethyläther und Propyläther des Äthylenglykols besteht.

8. Zusammensetzung nach Anspruch 5, worin das Lösungsmittelsystem Diacetonalkohol, Propylenglykolmonomethyläther und Propyläther des Äthylenglykols umfaßt.

9. Zusammensetzung nach Anspruch 8, worin das 2-(2'-Hydroxy-5'-t-octylphenyl)-benzotriazol in einer Menge von etwa 0,5 bis etwa 2,0 Gew.-% der Zusammensetzung vorhanden ist, das Nickeldibutyldithiocarbamat in einer Menge von etwa 0,05 bis etwa 0,2 Gew.-% der Zusammensetzung vorhanden ist.

10. Grundierzusammensetzung für thermoplastische Substrate, welche umfaßt:
(A) ein acrylisches Polymer, welches in einer Menge von etwa 1 bis etwa 5 Gew.-% der Zusammensetzung vorhanden ist;
(B) ein Lösungsmittelsystem, welches in einer Menge von etwa 90 bis etwa 98,5 Gew.-% der Zusammensetzungen vorhanden ist, und
(C) einen UV-Stabilisator, der in einer Menge von etwa 0,55 bis etwa 2,2 Gew.-% der Zusammensetzungen vorhanden ist, wobei der UV-Stabilisator umfaßt:
(i) 2-(2'-Hydroxy-5'-t-octylphenyl)-benzotriazol, welches in einer Menge von etwa 0,5 bis etwa 2,0 Gew.-% der Zusammensetzung vorhanden ist, und
(ii) Nickeldibutyldithiocarbamat, welches in einer Menge von etwa 0,05 bis etwa 0,2 Gew.-% der Zusammensetzung vorhanden ist.

11. Zusammensetzung nach Anspruch 10, worin das Lösungsmittelsystem entsprechende Mengen Diacetonalkohol, Propylenglykolmonomethyläther und Propyläther des Äthylenglykols enthält.

12. Zusammensetzung nach Anspruch 11, worin das acrylische Polymer Polymethylmethacrylat ist.

13. Grundierzusammensetzung für thermoplastische Substrate, wobei die Zusammensetzung umfaßt:
(A) von etwa 1 bis etwa 5 Gew.-% Polymethylmethacrylat;
(B) von etwa 10 bis etwa 20 Gew.-% Diacetonalkohol;
(C) von etwa 35 bis etwa 50 Gew.-% Propylenglykolmonomethyläther;
(D) von etwa 35 bis etwa 50 Gew.-% Propyläther des Äthylenglykols;
(E) von etwa 0,5 bis etwa 2,0 Gew.-% 2-(2'-Hydroxy-5'-t-octylphenyl)-benzotriazol; und
(F) von etwa 0,05 bis etwa 0,2 Gew.-% Nickeldibutyldithiocarbamat.

## Revendications

1. Article thermoplastique comprenant :
(A) un support choisi parmi les supports en polycarbonate aromatique et les supports en copoly(estercarbonate) aromatique, ledit support présentant une surface,
(B) une couche de primaire acrylique, adhérant à ladite surface, ladite couche de primaire comprenant :
(1) un polymère acrylique, et
(2) un agent de stabilisation vis-à-vis des UV, renfermant des quantités respectives de :
(i) 2-(2'-hydroxy-5'-t-octylphényl)benzotriazole, et de
(ii) dibutyldithiocarbamate de nickel,
et
(C) une couche supérieure en silicone durcie, adhérant à ladite couche de primaire.

2. Article thermoplastique selon la revendication 1, dans lequel ledit support est un support en polycarbonate aromatique.

3. Article thermoplastique selon la revendication 2, dans lequel ledit polymère acrylique est du poly(méthacrylate de méthyle).

4. Article thermoplastique selon la revendication 3, dans lequel ladite couche de primaire présente une épaisseur d'environ 0,025 µm (0,001 millième de pouce) à environ 12,7 µm (0,5 millième de pouce).

5. Composition de primaire pour supports thermoplastiques, comprenant :
(A) un polymère acrylique,
(B) un système solvant, et
(C) un agent de stabilisation vis-à-vis des UV, comprenant :
(i) du 2-(2'-hydroxy-5'-t-octylphényl)benzotriazole, et
(ii) du dibutyldithiocarbamate de nickel.

6. Composition selon la revendication 5, dans laquelle ledit polymère acrylique est un poly(méthacrylate de méthyle).

7. Composition selon la revendication 5, dans laquelle ledit système solvant est constitué essentiellement de diacétone-alcool, d'éther monométhylique de propylèneglycol et d'éther propylique d'éthylèneglycol.

8. Composition selon la revendication 5, dans laquelle ledit système solvant se compose de diacétone-alcool, d'éther monométhylique de propylèneglycol et d' éther propylique d'éthylèneglycol.

9. Composition selon la revendication 8, dans laquelle ledit 2-(2'-hydroxy-5'-t-octylphényl)benzotriazole est présent en une proportion d'environ 0,5 % en poids à environ 2 % en poids par rapport au poids de ladite composition, ledit dibutyldithiocarbamate de nickel étant présent en une proportion d'environ 0,05 % en poids à environ 0,2 % en poids par rapport au poids de ladite composition.

10. Composition de primaire pour supports thermoplastiques, comprenant :
(A) un polymère acrylique, présent en une proportion d'environ 1 % en poids à environ 5 % en poids par rapport au poids de ladite composition,
(B) un système solvant, présent en une proportion d'environ 90 % en poids à environ 98,5 % en poids par rapport au poids de ladite composition, et
(C) un agent de stabilisation vis-à-vis des UV, présent en une proportion d'environ 0,55 % en poids à environ 2,2 % en poids par rapport au poids de ladite composition, ledit agent de stabilisation vis-à-vis des UV comprenant :
(i) du 2-(2'-hydroxy-5'-t-octylphényl)benzotriazole, présent en une proportion d'environ 0,5 % en poids à environ 2,0 % en poids par rapport au poids de ladite composition, et
(ii) du dibutyldithiocarbamate de nickel, présent en une proportion d'environ 0,05 % en poids à environ 0,2 % en poids par rapport au poids de ladite composition.

11. Composition selon la revendication 10, dans laquelle ledit système solvant comprend des quantités respectives de diacétone-alcool, d'éther monométhylique de propylèneglycol et d'éther propylique d'éthylèneglycol.

12. Composition selon la revendication 11, dans laquelle ledit polymère acrylique est du poly(méthacrylate de méthyle).

13. Composition de primaire pour support thermoplastique, comprenant :
(A) d'environ 1 % en poids à environ 5 % en poids de poly(méthacrylate de méthyle),
(B) d'environ 10 % en poids à environ 20 % en poids de diacétone-alcool,
(C) d'environ 35 % en poids à environ 50 % en poids d'éther monométhylique de propylèneglycol,
(D) d'environ 35 % en poids à environ 50 % en poids d'éther propylique d'éthylèneglycol,
(E) d'environ 0,5 % en poids à environ 2,0 % en poids de 2-(2'-hydroxy-5'-t-octylphényl)benzotriazole, et
(F) d'environ 0,05 % en poids à environ 0,2 % en poids de dibutyldithiocarbamate de nickel.
